# EUROPEAN PATENT APPLICATION

(11) **EP 1 424 194 A1**
(43) Date of publication of application: **02.06.2004**
(21) Application number: 02762774.4
(22) Date of filing: 13.08.2002
(51) Int. Cl.: B32B 27/18, B32B 7/02, B32B 27/32, B32B 27/34

(54) **THERMOPLASTIC RESIN FILM**

(30) Priority: 16.08.2001 JP 2001246893
(71) Applicant: Yupo Corporation, Tokyo 101-0062 (JP)
(72) Inventor: NISHIZAWA, Takatoshi, c/o Yupo Corporation, Kashima-gun,, Ibaraki 314-0102 (JP); SHIINA, Masaki, c/o Yupo Corporation, Kashima-gun, Ibaraki 314-0102 (JP)
(74) Representative: VOSSIUS & PARTNER
(86) International application number: PCT/JP2002/008259
(87) International publication number: WO 2003/016051

(57) **Abstract**

An object of the invention is to provide a thermoplastic resin film excellent in antistatic property and capable of being printed by various means.

The invention relates to a thermoplastic resin film containing a multilayer film containing at least two layers containing a thermoplastic resin, and it contains a printing layer positioned on one surface or both surfaces, and inside the same, an intermediate layer containing a non-transfer antistatic agent.

## Description

### <TECHNICAL FIELD>

The present invention relates to a thermoplastic resin film excellent in antistatic property and capable of being printed by various means.

### <BACKGROUND ART>

A thermoplastic resin film is used in various purposes, such as wrapping films, labels and posters, owing to the excellent tensile strength and water resistance thereof. The printing property of the film is an important requirement since the film is printed with a trade name or characters, or printed with a bar code and attached to a product. A thermoplastic resin film generally has no antistatic property, and it causes various problems due to spark discharge upon roll printing and causes a problem in that films are not aligned upon paper feeding or delivery upon sheet-fed printing. Accordingly, antistatic property is generally imparted to the film by mixing a low molecular weight transfer antistatic agent, such as a glycerin fatty acid ester, an alkyldiethanolamine, a fatty acid alcohol amide, sorbitan monooleate, sodium alkylsulfonate and the like, in the thermoplastic resin, or by coating an amphoteric or cationic surface-treating antistatic agent on the film.

However, a film having an antistatic agent mixed thereon or coated thereon has a problem in that the antistatic property obtained is poor in long-term consistency. It also has a defect in that the antistatic property is difficult to be exhibited under a low humidity environment because the antistatic property is realized by ionic conductivity obtained by adsorption of moisture in the air. Furthermore, the antistatic property is lost by washing with water due to the low molecular weight transfer antistatic agent.

The antistatic agent impairs printing with an oleophilic offset ink having high viscosity since the antistatic agent is generally hydrophilic, and offset printing is enabled by balancing the hydrophilicity of the antistatic agent and the oleophilicity (as described in JP-A-50-161478, JP-B-59-27769 and JP-B-2-2910). However, there have been problems in the long-term consistency of an antistatic property and an antistatic property under low humidity, and a problem has been reported that adhesion of a printed ink, particularly adhesion upon immersing in water (water resistant adhesion), is deteriorated.

In view of these problems, such a film has been proposed that has a surface layer of a resin composition containing a crystalline polypropylene resin with an aromatic ring-containing polyether ester amide, a polyamide, a modified low molecular weight polypropylene and inorganic fine powder, and is subjected to an oxidation treatment (as described in JP-A-9-316211). Although the film is excellent in antistatic property after washing with water and paper feeding and delivering properies upon offset printing, it suffers influences of moisture in the air since an antistatic agent having hydrophilicity is present on the surface as similar to those of the low molecular weight transfer type and the coating type, whereby the stability upon printing is deteriorated, and there is a problem in water resistant adhesion of an ink.

The present invention is to solve the aforementioned problems, and it has been found that an antistatic agent is not contained in a surface layer to be printed but is contained in the interior thereof to exhibit antistatic property although it has been considered that the antistatic agent is necessarily mixed in or coated on the surface layer, whereby the invention has been completed. There are the aforementioned preceding examples of a low molecular weight antistatic agent of the transfer type, and in this case, the antistatic agent in the interior layer is transferred to the surface (bleed out) to exhibit antistatic property. It is expected, on the other hand, that the reason why the non-transfer type antistatic agent thus accumulated in the aforementioned configuration exhibits antistatic property is that the antistatic agent is connected in the form of a network in the interior layer to enable ionic conduction, and charges biased in the surface layer containing no antistatic agent are electrically neutralized therewith.

According to the constitution thus employed, not only are excellent consistency of an antistatic property, an antistatic property under low humidity and water washing resistance obtained, but also stable printing is enabled with less influence of humidity, and excellent water resistant adhesion of an ink is obtained.

### <Disclosure of the Invention>

The present invention relates to a thermoplastic resin film that is a multilayer film comprising at least two layers and comprising a thermoplastic resin, wherein the thermoplastic resin film comprises: a printing layer positioned on one surface or both surfaces; and inside the printing layer, an intermediate layer containing a non-transfer antistatic agent.

The multilayer film is preferably stretched in at least a uniaxial direction, and it also preferably contains inorganic fine powder and/or an organic filler.

The printing layer preferably has a surface resistivity on a printing surface of from 1 x 10⁸ to 1 x 10¹⁴ Ω, and also preferably has an ink adhesion strength on a printing surface of from 0. 5 to 10 kg·cm. The printing surface is preferably subjected to an activation treatment, a coating agent layer having ink adhesion property is preferably provided after the activation treatment, and a pigment coating layer is preferably provided.

The non-transfer antistatic agent contained in the intermediate layer preferably contains a polyamide copolymer as a main component, and more preferably a polyether ester amide. The intermediate layer preferably contains a thermoplastic resin composition comprising

| | | |
|---|---|---|
| Component a | thermoplastic resin | 5 to 95% by weight |
| Component b | polyether ester amide | 5 to 35% by weight |
| Component c | polyamide resin | 0 to 20% by weight |
| Component d | inorganic fine powder and/or organic filler | 0 to 70% by weight. |

The component a of the intermediate layer is preferably a polyolefin resin, and the intermediate layer preferably contains from 0.01 to 5% by weight of a metallic salt as component e.

The intermediate layer preferably contains from 0.5 to 20% by weight of an ionomer as component f, and the intermediate layer preferably contains 1 to 20% by weight of a modified low molecular weight polyolefin as component g.

### <Brief Description of the Drawings>

Fig. 1 is a schematic cross sectional view showing a film containing two layers: a printing layer and an intermediate layer.
Fig. 2 is a schematic cross sectional view showing a film containing three layers: a printing layer, an intermediate layer and another printing layer.
Fig. 3 is a schematic cross sectional view showing a film containing five layers: a printing layer, an intermediate layer, a center layer, another intermediate layer and another printing layer.
Fig. 4 is a schematic cross sectional view showing a film further containing other intermediate layers having another function between the printing layers and the intermediate layers.

In the figures, symbol 1 denotes a printing layer, 2 denotes an intermediate layer, 3 denotes a center layer, and 4 denotes a different intermediate layer.

### <Best Mode for carrying out the Invention>

### [Structure of Thermoplastic Resin Film]

The structure of the thermoplastic resin film of the invention will be described in more detail.

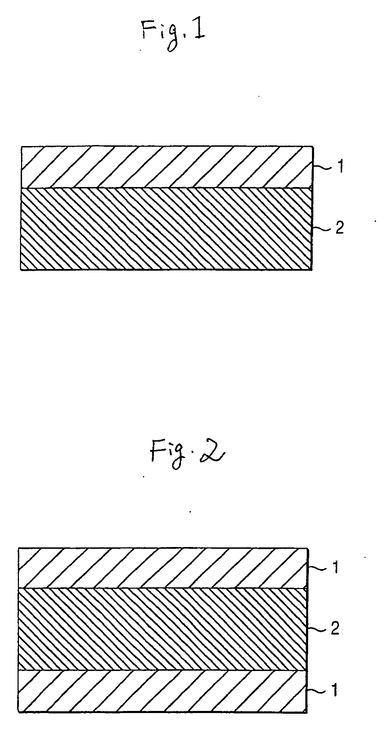

Fig. 1 shows a film containing two layers, a printing layer 1 and an intermediate layer 2, and print is to be made on the exposed side of the printing layer. The respective layers may be a non-stretched film obtained by extrusion cast molding with a T die or inflation molding, a uniaxially stretched film obtained by stretching the same in the machine direction or stretching the same in the transversal direction, or a biaxially stretched film obtained by stretching in the machine and transversal directions. The accumulation of the layers may be made by co-extrusion with a single die, extrusion lamination of one layer on another layer, or dry lamination through an adhesive. After uniaxial stretching of one layer, another layer may be made by extrusion lamination, and the assembly may be further stretched in the machine or transversal direction. The presence or absence of stretching and streching axis of the respective layer and the lamination methods may be combined without any limitation.

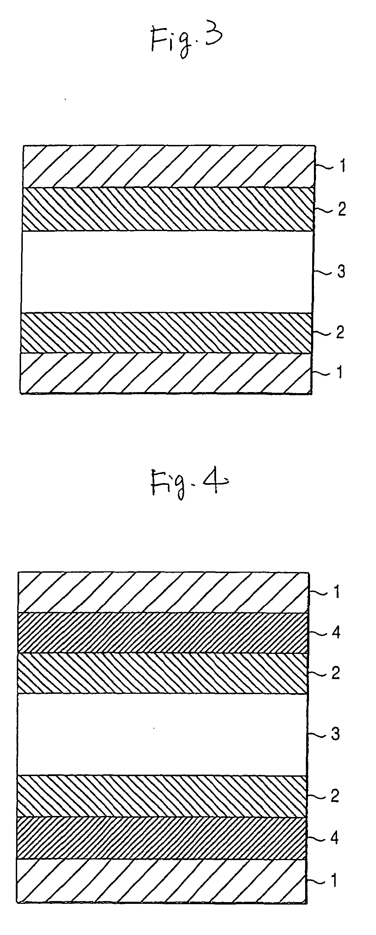

Fig. 2 shows a film containing three layers, a printing layer 1, an intermediate layer 2 and another printing layer 1, and print can be made on one exposed surface or both exposed surfaces. Stretching and accumulation of the respective layers may be combined without any limitation as similar to Fig. 1.

Fig. 3 shows a film containing five layers, a printing layer 1, an intermediate layer 2, a center layer 3, another intermediate layer 2 and another printing layer 1, and print can be made on one exposed surface or both exposed surfaces. In the case where printing is made only on one surface, three layers, a printing layer 1, an intermediate layer 2 and a center layer 3, may be employed. The center layer 3 may have a multilayer structure of two or more layers.

Fig. 4 shows a film having an intermediate layer 4 having another function accumulated betweentheprinting layer 1 and the intermediate layer 2, and, for example, barrier property to various kinds of gases can be imparted. The intermediate layer 2 and the intermediate layer 4 may be accumulated on surfaces opposite to each other. The center layer may have a multilayer structure of two or more layers as similar to Fig. 3.

### [Printing Layer]

The printing layer is such a layer that contains no antistatic agent and is subjected to various kinds of printing after subjecting the surface to an activation treatment or after providing a coating agent layer or pigment coating layer. The thickness of the printing layer is preferably from 0.1 to 20 µm, more preferably from 0.5 to 15 µm, and even more preferably from 1 to 10 µm. A thickness of less than 0.1 µm brings about a large influence of the antistatic agent contained in the intermediate layer to receive and be influenced by moisture in the air, whereby the stability on printing is deteriorated, and a problem arises in water resistant adhesion of an ink. In the case where it exceeds 20 µm, the effect of the antistatic agent contained in the intermediate layer is insufficient and fails to exhibit improvement of the surface resistivity.

### [Intermediate Layer]

The intermediate layer is such a layer that contains an antistatic agent and is not subjected to printing. The thickness of the intermediate layer is preferably 0.1 µm or more, and more preferably 1 µm or more. A thickness of less than 0. 1 µm brings about an insufficient effect of the antistatic agent contained in the intermediate layer and fails to exhibit improvement of the surface resistivity. The upper limit of the thickness can be appropriately determined depending on the desired thickness of the thermoplastic resin film of the invention and is generally 200 µm.

### [Center Layer]

The center layer is such a layer that may not be present in the invention and may or may not contain the non-transfer antistatic agent.

The thickness of the thermoplastic resin film of the invention is preferably from 40 to 2, 000 µm, and more preferably from 60 to 500 µm. A film having a thickness of 2,000 µm can be produced by accumulating the thermoplastic resin films of the invention depending on necessity.

### [Thermoplastic Resin]

Examples of the thermoplastic resin used in the invention include a polyolefin resin, such as a polypropylene resin, high density polyethylene, medium density polyethylene, low density polyethylene, poly-4-methylpentene-1, an ethylene-cyclic olefin copolymer and the like, an ethylene-vinyl acetate copolymer, an acrylic acid resin, such as an ethylene-acrylic acid copolymer, an ethylene-alkyl acrylate ester copolymer, an ethylene-alkyl methacrylate ester copolymer and a metallic salt of an ethylene-methacrylic acid copolymer, a polyamide resin, such as nylon-6, nylon-6,6, nylon-6,10, nylon-6,12 and the like, a polyethylene terephthalate resin, a polybutylene terephthalate resin, a polyvinyl chloride resin, an ABS resin and the like. These resins may be used after mixing two or more kinds of them.

Among these resins, a polypropylene resin, high density polyethylene and a polyethylene terephthalate resin are preferred from the standpoint of chemical resistance and cost, and a polypropylene resin is particularly preferred. As the polypropylene resin, a polypropylene homopolymer exhibiting an isotactic or syndiotactic stereoregularity or a copolymer containing propylene as a main component with an a-olefin, such as ethylene, butene-1, hexene-2, heptene-1, 4-methylpentene-1 and the like, can be used. These copolymers may be a two-component, three-component or four-component system and may be a random copolymer or a block copolymer.

### [Inorganic Fine Powder and/or Organic Filler]

The inorganic fine powder and/or the organic filler that may be contained in the thermoplastic resin film are not limited in species. Examples of the inorganic fine powder include ground calcium carbonate, precipitated calcium carbonate, calcined clay, talc, bariumsulfate, diatomearth, magnesiumoxide, zinc oxide, titanium oxide, silicon oxide and the like. Among these, ground calcium carbonate, calcined clay and talc are preferred owing to low cost and good moldability. Examples of the organic filler include polyethylene terephthalate, polybutylene terephthalate, polyamide, polycarbonate, polyethylene naphthalate, polystyrene, a melamine resin, polyethylene sulfide, polyimide, polyethyl ether ketone, polyphenylene sulfide, poly-4-methylpentene-1, polymethyl methacrylate, a homopolymer of a cyclic olefin, a copolymer of a cyclic olefin and ethylene, and the like, which have a melting point of from 120 to 300°C or a glass transition temperature of from 120 to 280°C. The content thereof is generally from 0 to 70% by weight, and preferably from 0 to 60% by weight. In the case where the content exceeds 70% by weight, the mechanical property of the thermoplastic resin containing the same is deteriorated.

### [Non-transfer Antistatic Agent]

The non-transfer antistatic agent used in the invention has such a mechanism that exhibits antistatic property by forming a network with an ionically conductive high molecular weight antistatic agent in a thermoplastic resin, which is essentially different from the mechanism of the aforementioned low molecular weight transfer antistatic agent having been used, in which the antistatic agent is transferred to the surface of the thermoplastic resin (bleed out), and the hydrophilic group thereof adsorbs moisture in the air to exhibit ionic conduction, whereby the antistatic property is exhibited. As the high molecular weight antistatic agent, those having a polyamide copolymer as a main component are preferred, and those having a polyether ester amide as a main component are more preferred. The non-transfer antistatic agent of this kind is described in JP-A-58-118838, JP-A-1-163234 and JP-A-6-313079. As a method for discriminating the non-transfer antistatic agent and the conventionally used transfer antistatic agent, the former exhibits antistatic property immediately after washing the surface of the film thus molded, but the later, the transfer antistatic agent, is released from the surface to fail to exhibit antistatic property, and a certain period of time is required to bleed out again.

Examples of (i) an aminocarboxylic acid or lactam having 6 or more carbon atoms or a salt of a diamine and a dicarboxylic acid having 6 or more carbon atoms, as a constitutional component of the polyether ester amide, include an aminocarboxylic acid, such as ω-aminocaproic acid, ω-aminoenanthic acid, ω-aminocaprylic acid, ω-aminopelargonic acid, ω-aminocapric acid, 11-aminoundecanoic acid, 12-aminododecanoic acid and the like, a lactam, such as caprolactam, enantholactam, caprylolactam, laurolactam and the like, and a salt of a diamine-dicarboxylic acid, such as a hexamethylenediamine-adipic acid salt, a hexamethylenediamine-sebacic acid salt, a hexamethylenediamine-isophthalic acid salt and the like, and in particular, caprolactam, 12-aminododecanoic acid and a hexamethylenediamine-adipic acid salt are preferably used.

Examples of (ii) a poly(alkylene oxide) glycol, as a constitutional component of the polyether ester amide, include polyethylene glycol, poly(1,2-propylene oxide) glycol, poly(1,3-propylene oxide) glycol, poly(tetramethylene oxide) glycol, poly(hexamethylene oxide) glycol, a block or random copolymer of ethylene oxide and propylene oxide, a block or random copolymer of ethylene oxide and tetrahydrofuran, and the like. Among these, polyethylene glycol is preferably used owing to an excellent antistatic property. The number average molecular weight of the poly(alkylene oxide) glycol used is from 200 to 6, 000, and particularly from 250 to 4, 000. In the case where the number average molecular weight is less than 200, the mechanical property of the polyether ester amide thus obtained is deteriorated, and in the case where the number average molecular weight exceeds 6, 000, it is not preferred since the antistatic property becomes insufficient.

Examples of (iii) a dicarboxylic acid having from 4 to 20 carbon atoms, as a constitutional component of the polyether ester amide, include an aromatic dicarboxylic acid, such as terephthalic acid, isophthalic acid, phthalic acid, napthalene-2,6-dicarboxylic acid, naphthalene-2,7-dicarboxylic acid, diphenyl-4,4'-dicarboxylic acid, diphenoxyethanedicarboxylic acid and sodium 3-sulfoisophthalate, an alicyclic dicarboxylic acid, such as 1,4-cyclohexanedicarboxylic acid, 1,2-cyclohexanedicarboxylic acid and dicyclohexyl-4,4'-dicarboxylic acid, an aliphatic dicarboxylic acid, such as succinic acid, oxalic acid, adipic acid, sebacic acid and dodecanedioic acid (decanedicarboxylicacid) , and the like, and in particular, terephthalic acid, isophthalic acid, 1,4-cyclohexanedicarboxylic acid, adipic acid, sebacic acid and dodecanedioic acid are preferably used from the standpoint of polymerization property, color tone and physical property.

The poly(alkylene oxide) glycol (ii) and the dicarboxylic acid (iii) are reacted at a molar ratio of 1/1, and they are generally fed with a varied charging ratio depending on the species of the dicarboxylic acid used.

The poly(alkylene oxide) glycol (ii) and the dicarboxylic acid (iii) as constitutional components of the polyether ester are used in a range of from 90 to. 10% by weight based on the constitutional units of the polyether ester amide. In the case where the ratio exceeds 90% by weight, the mechanical property of the polyether ester amide is deteriorated, and it is less than 10% by weight, it is not preferred since the antistatic property of the resin thus obtained is poor.

The polymerization method of the polyether ester amide is not particularly limited, and the following method and the like can be utilized.
(1) The aminocarboxylic acid or lactam (i) and the dicarboxylic acid (iii) are reacted to produce a polyamide prepolymer having carboxylic groups on both ends, to which the poly(alkylene oxide) glycol (ii) is reacted under vacuum condition.
(2) The compounds (i), (ii) and (iii) are charged in a reaction vessel and reacted in the presence or absence of water at high temperature under pressure to form a polyamide prepolymer having carboxylic acid terminals, and subsequently, the polymerization is effected under normal pressure or reduced pressure.
(3) The compounds (i), (ii) and (iii) are simultaneously charged in a reaction vessel and mixed in a molten state, and the polymerization is effected at once under high vacuum condition.

The polymerization catalyst is also not limited, and for example, one kind or two or more kinds of an antimony catalyst, such as antimony trioxide and the like, a tin catalyst, such as monobutyl tin oxide and the like, a titanium catalyst, such as tetrabutyl titanate and the like, a zirconate catalyst, such as tetrabutyl zirconate and the like, and the like may be used.

The content of the polyether ester amide (b) in the intermediate layer is generally from 5 to 35% by weight, and preferably from 6 to 30% by weight. In the case where the amount of the component (b) is less than the range, the antistatic property becomes insufficient, and in the case where it exceeds the range, the mechanical property of the thermoplastic resin containing the same is deteriorated.

### [Polyamide Resin]

The intermediate layer may contain, as a constitutional component, the polyamide resin (component c) for exhibiting the antistatic property more stably, such as a ring-opening polymer of a lactam having from 6 to 12 or more carbon atoms, a polycondensation product of an aminocarboxylic acid having from 6 to 12 or more carbon atoms, a polycondensation product of a dicarboxylic acid having from 4 to 20 carbon atoms and a diamine having from 6 to 12 or more carbon atoms, and the like.

Specific examples thereof include nylon 66, nylon 69, nylon 610, nylon 612, nylon 6, nylon 11, nylon 12, nylon 46 and the like. A copolymer polyamide may also be used, such as nylon 6/66, nylon 6/10, nylon 6/12, nylon 6/66/12 and the like. Examples thereof further include an aromatic series-containing polyamide obtained from an aromatic dicarboxylic acid, such as terephthalic acid, isophthalic acid and the like, and metaxylenediamine or an aliphatic diamine, and the like. Particularly preferred among these include nylon 66, nylon 6 and nylon 12.

The content of the polyamide resin (component c) in the intermediate layer is generally from 0 to 20% by weight, and preferably from 0 to 15% by weight. In the case where the content of the component c exceeds the range, the mechanical property of the thermoplastic resin containing the same is deteriorated.

### [Arbitrary Component]

The intermediate layer may contain a metallic salt, an ionomer, a modified polyolefin and the like for improving the antistatic property in addition to the aforementioned polyamide resin.

Examples of a metal of the metallic salt in the invention include Li, Na, K, Rb, Cs, Be, Mg, Ca, Sr, Ba, Ti, Zr, Mn, Fe, Co, Ni, Cu, Zn, Al and the like, and Na, Ca, Mg, Zn, Zr andAl are particularly preferred. Examples of a group for forming the salt with the metals include nitric acid, sulfuric acid, acetic acid, chloric acid, perchloricacid, carbonicacid, oxalicacid, silicicacid, phosphoric acid, boric acid, cyanic acid, halogen, thiocyanic acid, hydroxylic acid, oxygen and the like, and among these, perchloric acid, hydroxylic acid, phosphoric acid, acetic acid, oxygen, carbonic acid and silicic acid are preferred.

Specific examples thereof include sodium chlorate, sodium perchlorate, calcium hydroxide, magnesium hydroxide, aluminum hydroxide, zinc hydroxide, zirconium hydroxide, sodium phosphate, calcium oxide, magnesium oxide, aluminum oxide, zinc oxide, calcium carbonate, basic calcium carbonate, magnesium carbonate, basic magnesium carbonate, aluminum carbonate, zinc carbonate, potassium silicate, sodium silicate, calcium silicate, magnesium silicate and the like, and among these, sodium chlorate, sodium perchlorate, calcium hydroxide, magnesium hydroxide, zirconium hydroxide, calcium oxide, magnesium oxide and sodium phosphate are preferred. The content of the metallic salt in the intermediate layer is generally 5% by weight or less, and preferably 3% by weight or less. In the case where the content exceeds the range, the mechanical strength of the thermoplastic resin containing the same is deteriorated.

Examples of the ionomer resin in the invention include an ionic polymer obtained by adding a metallic ion having an atomic valence of from 1 to 3 to a copolymer of ethylene or propylene and an α, β-unsaturated carboxylic acid derivative. Examples of the α, β-unsaturated carboxylic acid derivative include acrylic acid, methacrylic acid, itaconic acid, maleic acid, ethyl acrylate, isobutyl acrylate, methyl methacrylate, methyl hydrogen maleate and the like, and representative examples of the metallic ion having an atomic valence of from 1 to 3 include Na⁺, K⁺, Mg⁺⁺, Zn⁺⁺, Al⁺⁺⁺ and the like. As the ionomer resin, various grades thereof can be used that are generally available in trade names, such as "Surlyn" and "Himilan". Among these, those ionomer resins are particularly preferably used that have a Zn ion or a Na ion as the metallic ion. A mixture thereof is particularly preferred since both the mechanical property and the antistatic property of the thermoplastic resin film of the invention are excellent. The content of the ionomer resin in the intermediate layer is generally 20% by weight or less, and preferably 15% by weight or less. In the case where the content exceeds the range, the mechanical property of the thermoplastic resin containing the same is deteriorated.

The modified polyolefin in the invention is a modified low molecular weight polyethylene or polypropylene having at least one group selected from a hydroxyl group, an (anhydrous) carboxylic acid group, an oxyalkylene group, an epoxy group and an amino group in the molecule, a number average molecular weight of from 800 to 25,000, and preferably from 1,000 to 20,000, and an acid value of from 5 to 150, and preferably from 10 to 100, or is preferably a modified low molecular weight polyethylene or polypropylene having a number average molecular weight of from 850 to 28,000, and preferably from 1,000 to 20,000, in which a part or the whole of the (anhydrous) carboxylic acid units are secondarily modified with an alkanol amine and/or a hydroxyl group or an amino group-containing polyoxyalkylene compound. The content of the modified polyolefin in the intermediate layer is generally 20% by weight or less, and preferably 15% by weight or less. In the case where the content exceeds the range, the mechanical property of the thermoplastic resin containing the same is deteriorated.

In the thermoplastic resin film of the invention, other known additives for resins than those described in the foregoing may be arbitrarily added in such an- extent that the target antistatic property is impaired. Examples of the additives include a dye, a nucleating agent, a plasticizer, a releasing agent, an antioxidant, a flame retardant, an ultraviolet absorbing agent and the like.

### [Activation Treatment]

The printing surface of the thermoplastic resin film of the invention is preferably activated, for example, by a corona discharge treatment, a flame plasma treatment, a flame treatment, a glow discharge treatment, an ozone treatment and the like for improving adhesion between various kinds of printing inks and the film. Among these, a corona discharge treatment and a flame plasma treatment are preferred since excellent ink adhesion property is obtained.

### [Coating Agent Layer]

A coating agent layer may be provided on the printing surface of the thermoplastic resin film of the invention for improving adhesion between various kinds of printing inks and the film. As the coating agent, a component having a functional group capable of attaining chemical adhesion, such as an isocyanate series, a urethane series, an epoxy series, a polyethyleneimine series, a polyamine polyamide series and the like, is preferably used after arbitrarily selecting depending on the species of the ink. The coating is preferably attained by using, for example, a'roll coater, abladecoater, an air knife coater, a size press coater or the like, to make 0.001 to 20 g/m², and preferably from 0.005 to 10 g/m², in terms of solid content.

### [Pigment Coating Layer]

A pigment coating layer may be provided on at least a surface to be printed of the thermoplastic resin film of the invention for improving the printing capability.

Examples of the pigment coating layer include those generally used for coated paper that contain from 10 to 80% by weight of a pigment, such as clay, talc, calcium carbonate, magnesium carbonate, aluminum hydroxide, silica, aluminum silicate, calcium silicate, a plastic pigment, titanium dioxide, fuller's earth powder and the like, and from 90 to 20% by weight of an adhesive. Examples of the adhesive used herein include a latex, such as SBR (styrene butadiene rubber), MBR (methacrylate butadiene rubber) and the like, an acrylic emulsion (such as an aqueous solution containing an acrylate ester resin and the like), starch, PVA (polyvinyl alcohol), CMC (carboxymethyl cellulose), methyl cellulose and the like. A dispersing agent, such as special sodium polycarboxylate and the like, a crosslinking agent, such as polyamide urea and the like, an antifoaming agent, a waterproof agent, a lubricating agent, a fluorescent paint and the like may be added to the compounding ingredients. The pigment coating agent is generally used as an aqueous coating agent having a solid concentration of from 5 to 90% by weight, and preferably from 35 to 65% by weight.

### [Coating Method and Means]

Specific examples of the means for coating the pigment coating agent on the base material layer include such a coating means as gravure coating, Mayer bar coating, roll coating, blade coating, size press coating, hot melt coating and the like. The coated amount is from 0.1 to 50 g/m², and preferably from 1 to 15 g/m². The thickness of the coated layer is from 0.05 to 50 µm, preferably from 0.5 to 20 µm, and particularly preferably from 5 to 15 µm, and it is formed on one surface or both surfaces of the film.

The surface of the coated layer may be subjected to a press smoothing treatment, for example, by a calender treatment or the like, depending on necessity. The coating may be carried out twice or more depending on necessity.

### [Printing]

The printing can be made by such a printing system as gravure printing, offset printing, letter press printing, flexo printing, screen printing, electrophotographic printing, melt thermal transfer printing and the like, to print a character, a trade name, a manufacturer, a dealer, how to use, a bar code and the like.

### [Surface Resistivity]

The surface resistivity of the printing surface of the printing layer of the thermoplastic resin film of the invention was measured according to JIS K6911 under an atmosphere of 23°C and a relative humidity of 50%.

The surface resistivity is preferably from 1 x 10⁸ to 1 x 10¹⁴ Ω, and more preferably from 1 x 10⁹ to 1 x 10¹³ Ω. In the case where it exceeds 1 x 10¹⁴ Ω, feeding and delivery of paper becomes difficult upon printing.

### [Ink Adhesion]

The ink adhesion strength on the printing surface of the printing layer of the thermoplastic resin film of the invention is preferably from 0.5 to 10 kg·cm, and more preferably from 1 to 10 kg·cm. In the case where it is less than 0.5 kg·cm, the film cannot be subjected to practical use since the ink is liable to be released. While the upper limit of the ink adhesion strength is not particularly limited, the upper limit is set at 10 kg·cm because the thermoplastic resin film of the invention suffers surface breakage in the case where it exceeds 10 kg·cm.

### <Example>

The invention will be described in more detail below withreferencetoexamplesandcomparativeexamples. The materials, the using amounts, the ratios, the operations and the like shown below may be appropriately changed unless they deviate from the invention. Therefore, the scope of the invention is not limited to the following specific examples.

### [I] Measurement Method and Evaluation Method of Property

Measurement and evaluation of the properties in the examples and the comparative examples were made by the following methods.

### (1) Measurement of Property

(a) MFR: according to JIS K7210
(b) Density: according to JIS K7112
(c) Opacity: according to JIS P8138
(d) Glossiness: according to JIS P8142 at an angle of 75°
(e) Surface resistivity: according to JIS K6911 in atmosphere of 23° and a relative humidity of 50%

### (2) Offset Printing Property

(f) Offset Printing Paper Feeding Property
   The thermoplastic resin films thus obtained were continuously printed for 1,000 sheets by using a printing machine, "Dia II Type", produced by Mitsubishi Heavy Industries, Ltd. , in an atmosphere of 25°C and a relative humidity of 40% in a size of a half Kikuhan (636 mm x 470 mm) at a rate of 7, 000 sheets per hour. The evaluation was made by the number of stoppages of the machine due to trouble of the sheet feeding device (two-ply feeding and paper misalignment) as the standard.
   A: The machine was never stopped.
   B: The machine was stopped once to three times.
   C: The machine was stopped over four times.
(g) Ink Transfer Property
   Continuous printing was made with an oleophilic ink (Best SP, magenta and cyan, produced by T&K TOKA Company) on the printing machine used in the item (f), and the ink transfer property was evaluated by the following standard.
   A: A dampening solution could be easily adjusted with good ink transfer property.
   B: A dampening solution was difficult to be adjusted with poor ink transfer property.
   C: The ink transfer property was poor irrespective to adjustment of a dampening solution.
(h) Ink Adhesion Property
   An UV ink (Best Cure 161S, black, produced by T&K TOKA Company) was spread on the printing surface of the thermoplastic resin film by using an RI tester (produced by Akira Seisakusho Co., Ltd.), thus obtained to 2 g/m², and after subjecting UV irradiation of 100 mJ/cm², "Cellotape" (a trade name, produced by Nichiban Co., Ltd.) was adhered to measure the strength (kg·cm) upon peeling the Cellotape with an internal bond tester (produced by Kumagai Riki Kogyo Co., Ltd.). The resulting strength and decision on practical use were evaluated by the following standard.
   1 kg·cm or more: A: No ink was peeled with good condition.
   0.5 to less than 1 kg kg·cm:
   B: The ink was slightly peeled, but no practical problem occurred.
   less than 0.5 kg·cm:
   C: The ink was entirely peeled and could not be practically used.
(i) Water Resistant Ink Adhesion Property
   A printed matter thus printed and subjected to UV irradiation in the item (h) was immersed in tap water at ordinary temperature for 2 hours, and immediately after taking the film out and wiping off the water, the ink adhesion property was evaluated with the same measuring apparatus and the same evaluation standard.

### (3) Melt Thermal Transfer Printing Capability

A bar code was printed by using a melt thermal transfer printing machine, "Bar Code Printer B-30-S5", produced by Toshiba Tec Corp. , and heat melting ink ribbons, "Wax Type B110A" and "Resin Type B110C", produced by Ricoh Co., Ltd., under an atmosphere of 23°C and 50%. The printed film was immersed in tap water at ordinary temperature for 2 hours, and immediately after taking the film out and wiping off the water, the water resistant adhesion of the printed part was evaluated with the same measuring device and the same evaluation standard as in the item (h).

### (4) Electrophotographic Printing Capability

A bar code was printed by using an electrophotographic printer, "Laser Shot LBP740", produced by Canon Inc. The printed film was immersed in tap water at ordinary temperature for 2 hours, and immediately after taking the film out and wiping off the water, the water resistant adhesion of the printed part was evaluated with the same measuring device and the same evaluation standard as in the item (h).

### [II] Experimental Examples

### [Production Example of Non-transfer Antistatic Agent]

55 parts of 12-aminododecanoic acid, 40 parts of polyethylene glycol having a number average molecular weight of 1,000 and 15 parts of adipic acid were charged in a reaction vessel equipped with a helical ribbon agitating blade along with 0.2 part of "Irganox 1098" (antioxidant) and 0.1 part of an antimony trioxide catalyst, and after nitrogen substitution, the mixture was stirred at 260°C for 60 minutes to obtain a transparent uniform solution. It was then polymerized under conditions of 260°C and 0.5 mmHg or less for 4 hours to obtain a viscous transparent polymer. The polymer was discharged in a gut form onto a cooling belt and pelletized to a polyether ester amide in a pellet form. 20 parts by weight of a polyamide (nylon 12, produced by Ube Industries, Ltd.) and 20 parts by weight of an ionomer (Himilan 1605, produced by Du Pont Mitsui Polychemical Co., Ltd.) were dry mixed with 100 parts by weight of the polyether ester amide to obtain an antistatic agent blend (b1).

50 parts by weight of ε-caprolactam, 40 parts of polyethylene glycol having a number average molecular weight of 1,000 and 10 parts of dodecanedioic acid were charged in the same reaction vessel as in b1 along with 0.2 part of "Irganox 1098" (antioxidant) and 0.02 part of an antimony trioxide catalyst, and after nitrogen substitution, the mixture was stirred at 260°C for 60 minutes to obtain a transparent uniform solution. The reaction vessel was evacuated to 500 mmHg to remove moisture in the gas phase in the vessel, and 0.08 part of tetrabutyl zirconate was added. It was then polymerized under conditions of 260°C and 0.5 mmHg or less for 3 hours to obtain a viscous transparent polymer. The polymer was discharged in a gut form onto a cooling belt and pelletized to a polyether ester amide in a pellet form. 10 parts by weight of a polyamide (nylon 12, produced by Ube Industries, Ltd.) and 5 parts by weight of sodium perchlorate were dry mixed with 100 parts by weight of the polyether ester amide to obtain an antistatic agent blend (b2).

110 parts of 12-aminododecanoic acid, 16.3 parts of adipic acid, 0.3 part of "Irganox 1010" (antioxidant) and 7 parts of water were charged in the same reaction vessel as in b1, and after nitrogen substitution, the mixture was stirred at 220°C for 4 hours under pressure and sealing to obtain 117 parts of a polyamide oligomer with carboxyl groups on both ends having an acid value of 107. 225 parts of an ethylene oxide adduct of bisphenol A having a number average molecular weight of 2,000 and 0.5 part of zirconyl acetate were then added, and the mixture was polymerized under conditions of 245°C and a reduced pressure of 1 mmHg or less for 5 hours to obtain a viscous transparent polymer. The polymer was discharged in a gut form onto a cooling belt and pelletized to a polyether ester amide in a pellet form. 10 parts by weight of a polyamide (nylon 6, produced by Ube Industries, Ltd.) and 10 parts by weight of a maleic anhydride-modified polypropylene (Umex 1001, produced by Sanyo Chemical Industries, Ltd.) were dry mixed with 100 parts by weight of the polyether ester amide to obtain an antistatic agent blend (b3).

### [Production Example of Thermoplastic Resin Film]

### Production Example 1

(1) A resin composition containing 75% by weight of a propylene homopolymer, "Novatec PP, MA-8", a trade name, produced by Japan Polychem Corp. (melting point: 164°C), 10% by weight of a high density polyethylene, "Novatec HD, HJ580", a trade name, produced by Japan PolychemCorp. (melting point: 134°C, density 0.960 g/cm³) and 15% by weight of calcium carbonate powder having a particle diameter of 1.5 µm, "Softon 1500", a trade name, produced by Bihoku Funka Kogyo Co. , Ltd. , was melt kneaded by using an extruder and extruded from a die at a temperature of 250°C into a sheet form, and the sheet was cooled to a temperature of about 50°C.
   The sheet was then heated to about 145°C and stretched 4 times in the machine direction by utilizing peripheral velocities of a group of rolls to obtain a uniaxially stretched film. (center layer (2))
(2) Separately, a resin composition (center layer (1) ) containing 50% by weight of a propylene homopolymer, "Novatec PP, MA-3", a trade name, produced by Japan Polychem Corp. (melting point: 165°C), 5% by weight of a high density polyethylene, "Novatec HD, HJ580" and 45% by weight of calcium carbonate powder having a particle diameter of 1.5 µm, "Softon 1500", a trade name, produced by Bihoku Funka Kogyo Co., Ltd., a resin composition (intermediate layer) containing 45% by weight of "Novatec PP, MA-3", 15% by weight of the antistatic agent blend (b1) and 40% by weight of calcium carbonate powder having a particle diameter of 1. 5 µm, "Softon 1500", a trade name, produced by Bihoku Funka Kogyo Co., Ltd., and a resin .. composition (printing layer) containing 50% by weight of a propylene homopolymer, "Novatec PP, MA-3", 5% by weight of a high density polyethylene, "Novatec HD, HJ580" and 45% by weight of calcium carbonate powder having a particle diameter of 1.5 µm, "Softon 1500", a trade name, produced by Bihoku Funka Kogyo Co. , Ltd. were melt kneaded in separate extruders at 240°C, respectively, and supplied to one die. The resin compositions were accumulated in the die and then extruded into a sheet form on the aforementioned longitudinally stretched film (center layer (2)) for accumulating. (center layer (2)/center layer (1)/intermediate layer/printing layer)
(3) A resin composition having the same constitution as in (2) accumulated in a die was accumulated on the side of the center layer (2) of the sheet obtained in (2). (printinglayer/intermediatelayer/centerlayer (1)/center layer (2)/center layer (3)/intermediate layer/printing layer)
(4) The sheet containing seven layers was introduced into a tenter oven and was again heated to 155°C. The sheet was then stretched in the transversal direction by 8 times, and after annealing at 164°C, the sheet was cooled to 55°C, followed by slitting side edges. Thus, a multilayer film having a seven-layer structure having a density of 0.80 g/cm³ and a thickness of 100 µm (thickness of respective layers : 1/3/16/60/16/3/1 µm) was obtained.

### Production Examples 2 to 7

The formulation and the thickness of the layers were changed as shown in Table 1.

### Production Example 2:

The antistatic agent blend was changed to b2.

### Production Example 3:

The antistatic agent blend was changed to b3.

### Production Example 4:

The antistatic agent blend b1 was used but formed only on one side (without an intermediate layer on the back surface) to obtain 6 layers in total.

### Production Example 5:

No inorganic fine powder was used in the printing layers and the intermediate layers to obtain a film having a high glossiness.

### Production Example 6:

No antistatic agent was blended (without any intermediate layer) to obtain 5 layers in total.

### Production Example 7:

The antistatic agent blend b3 was directly mixed in the printing layers (without any intermediate layer) to obtain 5 layers in total.

### Production Example 8

1% of a transfer antistatic agent, a glycerin fatty acid ester compound, "Atmer 129", a trade name, produced by Ciba Specialty Chemicals, Inc., was added to the printing layers.

### Production Example 9

(1) A resin composition (center layer (2)) containing 75% by weight of "Novatec PP, MA-8", 10% by weight of "Novatec HD, HJ580" and 15% by weight of calcium carbonate powder having a particle diameter of 1.5 µm, "Softon 1500", a trade name, produced by Bihoku Funka Kogyo Co., Ltd., a resin composition (intermediate layer) containing 45% by weight of "Novatec PP, MA-8", 15% by weight of the antistatic agent blend (b2) and 40% by weight of calcium carbonate powder having a particle diameter of 1. 5 µm, "Softon 1500", a trade name, produced by Bihoku Funka Kogyo Co., Ltd., and a resin composition (printing layer) containing 50% by weight of a propylene homopolymer, "Novatec PP, MA-8", 5% by weight of a high density polyethylene, "Novatec HD, HJ580" and 45% by weight of calcium carbonate powder having a particle diameter of 1.5 µm, "Softon 1500", a trade name, produced by Bihoku Funka Kogyo Co., Ltd. were melt kneaded in separate extruders at 250°C, respectively, and supplied to one die. The three resin compositions were accumulated in the die to five layers and then extruded into a sheet form, followed by cooling to a temperature of about 50°C. (printing layer/intermediate layer/center layer (2)/intermediate layer/printing layer)
(2) The sheet was then heated to about 145°C and stretched 4 times in the machine direction by utilizing peripheral velocities of a group of rolls to obtain a uniaxially stretched film.
(3) The sheet containing five layers was introduced into a tenter oven and was again heated to 160°C. The sheet was then stretched in the transversal direction by 8 times, and after heat setting at 164°C, the sheet was cooled to 55°C, followed by slitting side edges. Thus, a multilayer film having a five-layer structure having a density of 0.74 g/cm³ and a thickness of 80 µm (thickness of respective layers: 1/3/72/3/1 µm) was obtained.

### Production Examples 10 to 12

The formulation and the thickness of the layers were changed as shown in Table 1.

### Production Example 10:

A transparent film containing no inorganic fine powder was obtained.

### Production Example 11:

The antistatic agent b2 was directly mixed in the printing layers (without any intermediate layer) to obtain 3 layers in total.

### Production Example 12:

No antistatic agent was mixed to obtain a single layer film containing only the center layer (2).

### Production Example 13

(1) A resin composition (center layer (2)) containing 70% by weight of "Novatec PP, MA-8", 10% by weight of "Novatec HD, HJ580" and 20% by weight of calcium carbonate powder having a particle diameter of 1.5 µm, "Softon 1500", a trade name, produced by Bihoku Funka Kogyo Co., Ltd., a resin composition (intermediate layer) containing 45% by weight of "Novatec PP, MA-8", 15% by weight of the antistatic agent blend (b1) and 40% by weight of calcium carbonate powder having a particle diameter of 1. 5 µm, "Softon 1500", a trade name, produced by Bihoku Funka Kogyo Co., Ltd., and a resin composition (printing layer) containing 50% by weight of a propylene homopolymer, "Novatec PP, MA-8", 5% by weight of a high density polyethylene, "Novatec HD, HJ580" and 45% by weight of calcium carbonate powder having a particle diameter of 1.5 µm, "Softon 1500", a trade name, produced by Bihoku Funka Kogyo Co., Ltd. were melt kneaded in separate extruders at 250°C, respectively, and supplied to one die. The three resin compositions were accumulated in the die to five layers and then extruded into a sheet form, followed by cooling to a temperature of about 50°C. (printing layer/intermediate layer/center layer (2)/intermediate layer/printing layer)
(2) The sheet was then heated to about 140°C and stretched 5 times in the machine direction by utilizing peripheral velocities of a group of rolls to obtain a uniaxially stretched film. The film was subsequently annealed at 155°C with a heating roll and then cooled to 40°C, followed by slitting side edges. Thus, a multilayer film having a five-layer structure having a density of 0.86 g/cm³ and a thickness of 90 µm (thickness of respective layers: 1/3/82/3/1 µm) was obtained.

### Production Examples 14 to 16

The formulation and the thickness of the layers were changed as shown in Table 1.

### Production Example 14:

A transparent film containing no inorganic fine powder was obtained.

### Production Example 15:

The antistatic agent blend b1 was mixed in the center layer (2). The center layer functioned as an intermediate layer.

### Production Example 16:

No antistatic agent was mixed to obtain a three-layer film.

### [Production Example of Coating Agent]

### Coating Agent A

100 parts of a 25% by weight aqueous solution of polyethyleneimine, "Epomin P-1000", 10 parts of n-butyl chloride and 10 parts of propylene glycol monomethyl ether were mixed, and a modification reaction was carried out in a nitrogen atmosphere at 80°C for 20 hours to obtain a butyl-modified polyethyleneimine aqueous solution. An aqueous solution thereof having an effective component amount (dried solid content amount) of 1% by weight was produced, which was designated as a coating agent A.

### Coating Agent B

100 parts of a 25% by weight aqueous solution of polyethyleneimine, "Epomin P-1000", 10 parts of glycidol and 10 parts of propylene glycol monomethyl ether were mixed, and a modification reaction was carried out in a nitrogen atmosphere at 80°C for 16 hours to obtain a glycidol-modified polyethyleneimine aqueous solution. An aqueous solution thereof having an effective component amount (dried solid content amount) of 1% by weight was produced, which was designated as a coating agent B.

### Coating Agent C

An aqueous solution containing 1% by weight (effective content, hereinafter the same) of a water soluble antistatic agent, "Saftomer ST-1100", produced by Mitsubishi Chemical Corp., 0.5% by weight of the aforementioned butyl-modified polyethyleneimine and 0.5% by weight of a epichlorohydrin adduct of polyamine polyamide, "WS-570", produced by Japan PMC Corp., was produced, which was designated as a coating agent C.

### [Example 1]

The film obtained in Production Example 1 was subjected to a corona discharge treatment of 50 W/m²·min by using a discharge processor, "HFS400S", produced by Kasuga Electric Works, Ltd., and the coating agent A was coated on both surfaces to a coated amount after drying of 0.05 g/m² per surface with a roll coater, followed by drying with hot air.

### [Example 2]

A thermoplastic resin film was obtained in the same manner as in Example 1 except that the coating agent B was used instead of the coating agent A. The evaluation results thereof are shown in Table 2.

### [Example 3]

Both surfaces of the film obtained in Production Example 1 were subjected to a flame treatment by using a direct flame plasma processor, "Flynn F3000", produced by Flynnburner Corp., with propane as a combustion gas at a line velocity of 40 m/min and an applied energy of 40,000 J/m². The evaluation results thereof are shown in Table 2.

### [Examples 4, 5 and 7 to 13 and Comparative Examples 1 to 4 and 6 to 8]

The combinations of the thermoplastic resin film base material, the activation treatment and the coating agent shown in Table 2 were used. The evaluation results of the thermoplastic resin films thus obtained are shown in Table 2.

### [Example 6]

Both surfaces of the film obtained in Production Example 4 were subjected to a corona.discharge treatment and coated with the coating agent B. Separately, a solvent type hard adhesive, "Oribain BPS-1109", a trade name, produced by Toyo Ink Mfg. Co. , Ltd. , was coated on silicone oil-coated kraft paper having a thickness of 150 µm and a stiffness of 12 g·f·cm to a solid amount of 25 g/m² by using a knife coater, and after drying in an oven at 95°C, it was adhered to the surface of the intermediate layer containing no antistatic agent of the aforementioned thermoplastic resin film to prepare a pressure-sensitive adhesive sheet. The results of offset printing thereof are shown in Table 2. The evaluation results of melt thermal transfer printing capability and electrophotographic printing capability are shown in Table 3.

### [Comparative Example 5]

Both surfaces of the film obtained in Production Example 6 were subjected to a corona discharge treatment and coated with the coating agent C. A pressure-sensitive adhesive sheet was produced in the same manner as in Example 6 except therefor and evaluated. The results are shown in Tables 2 and 3.

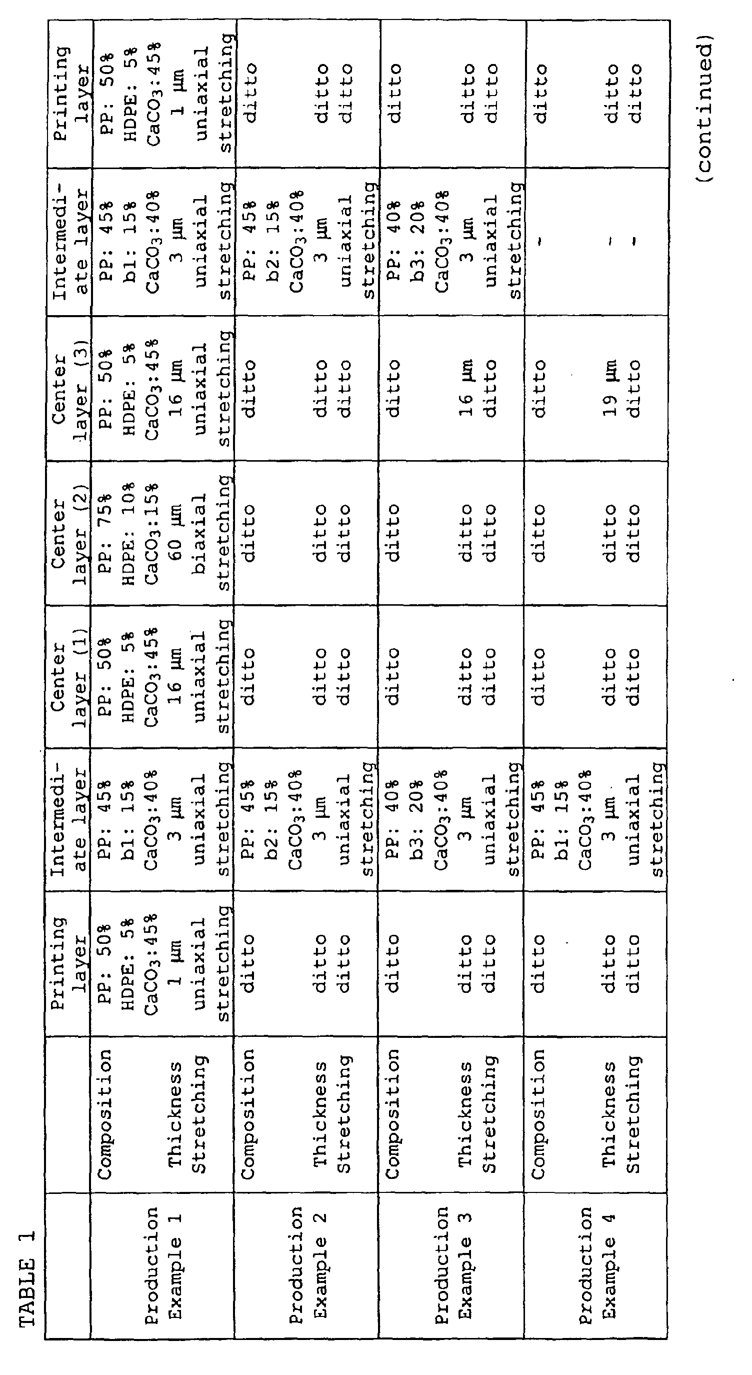

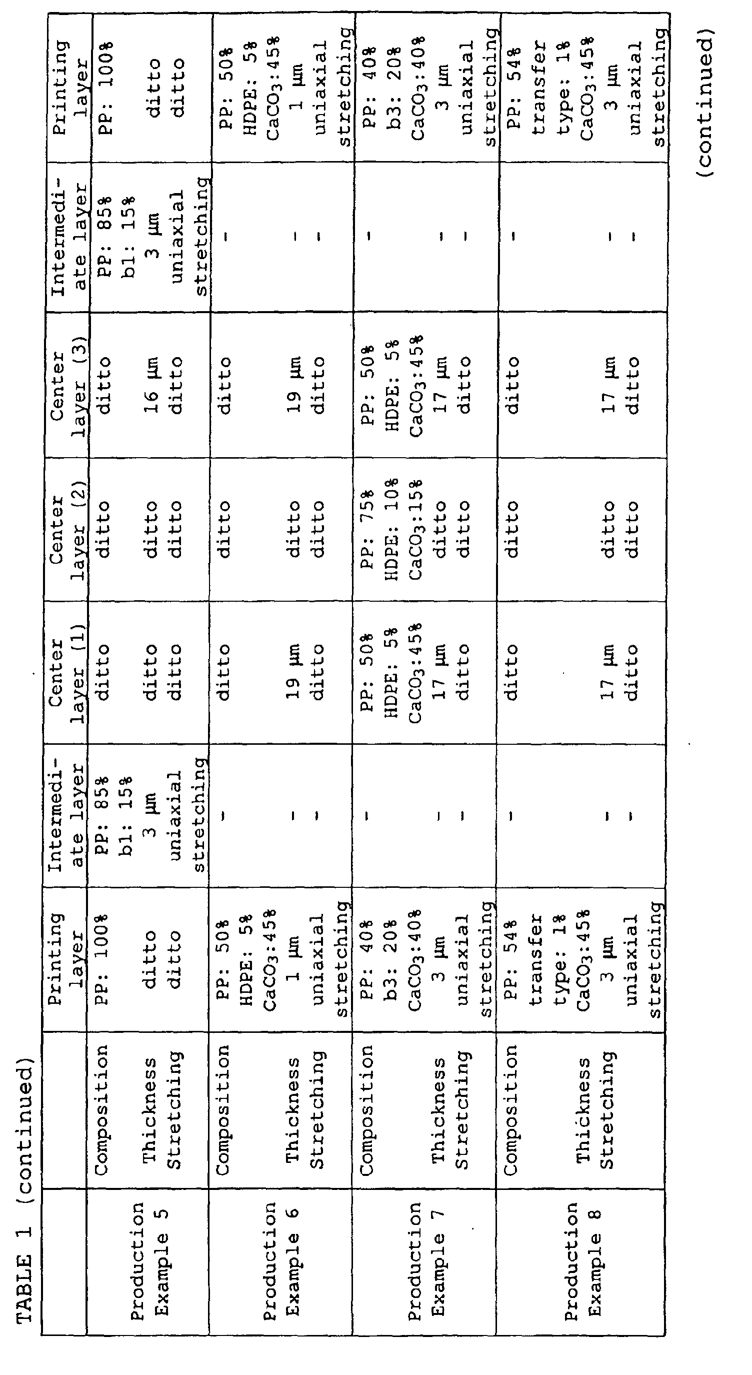

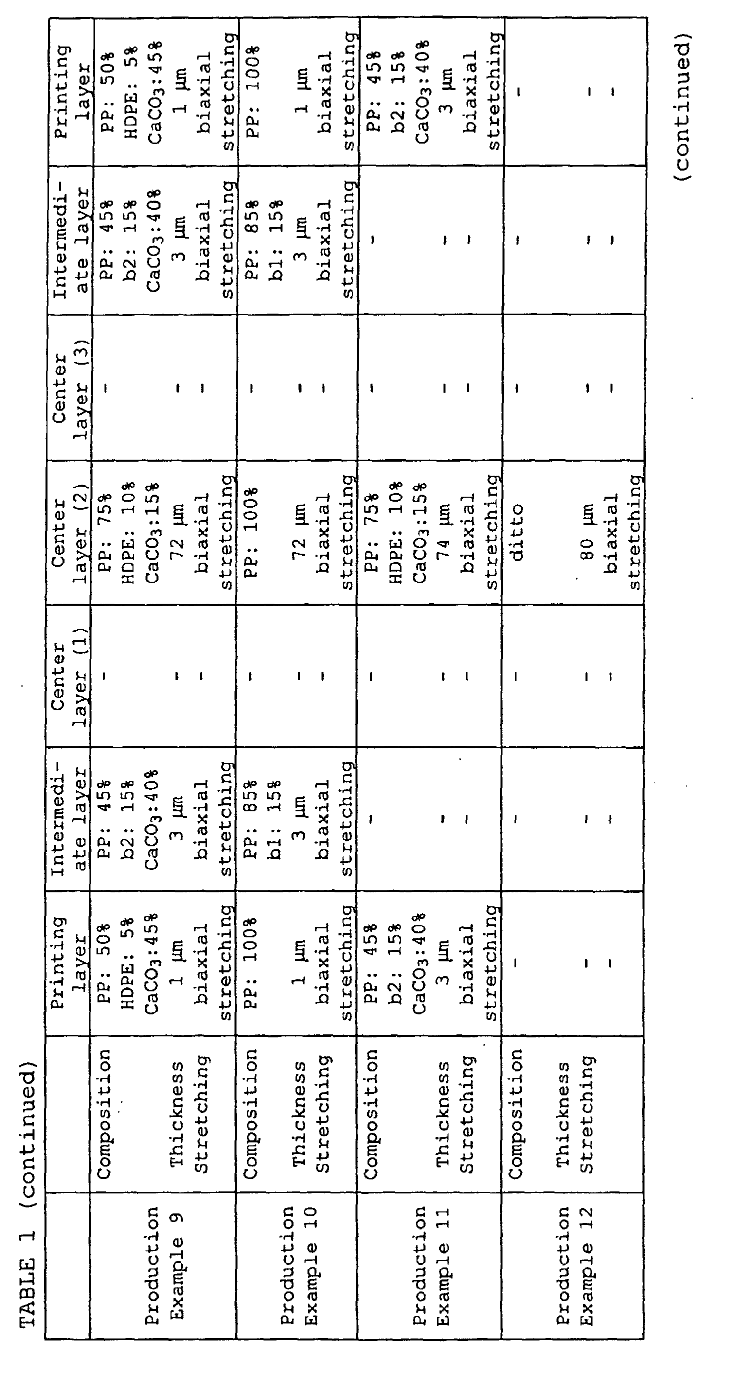

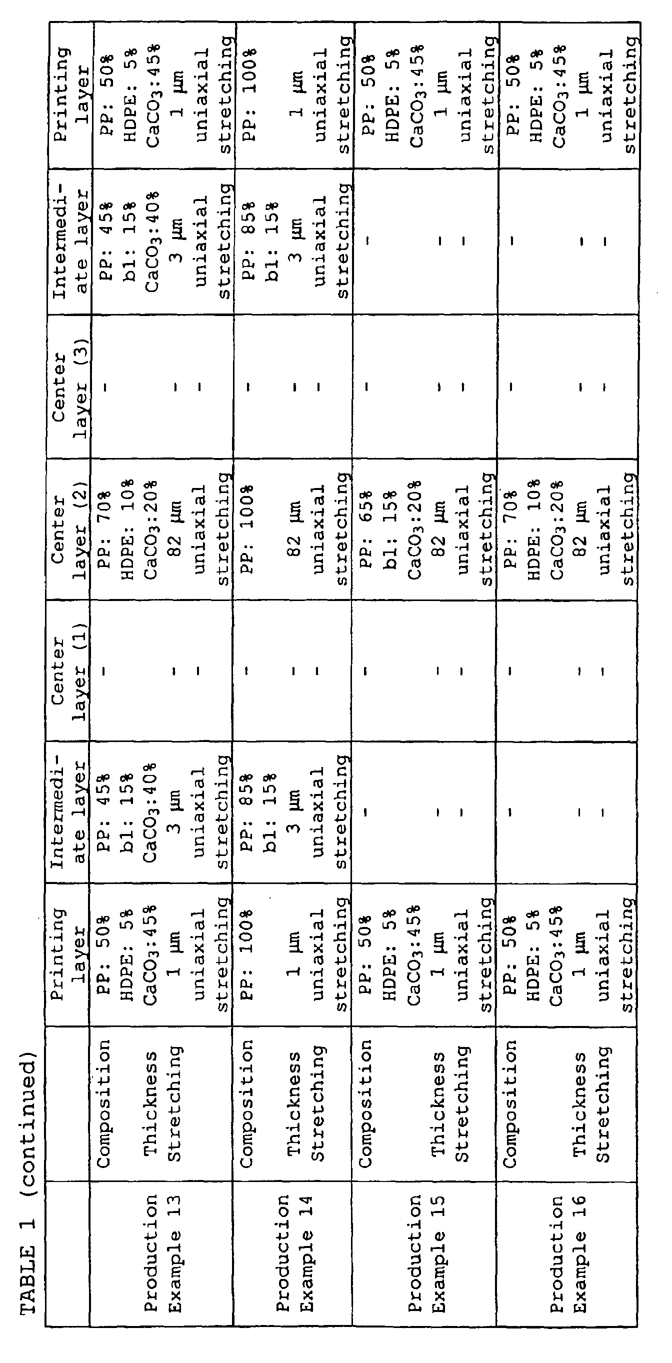

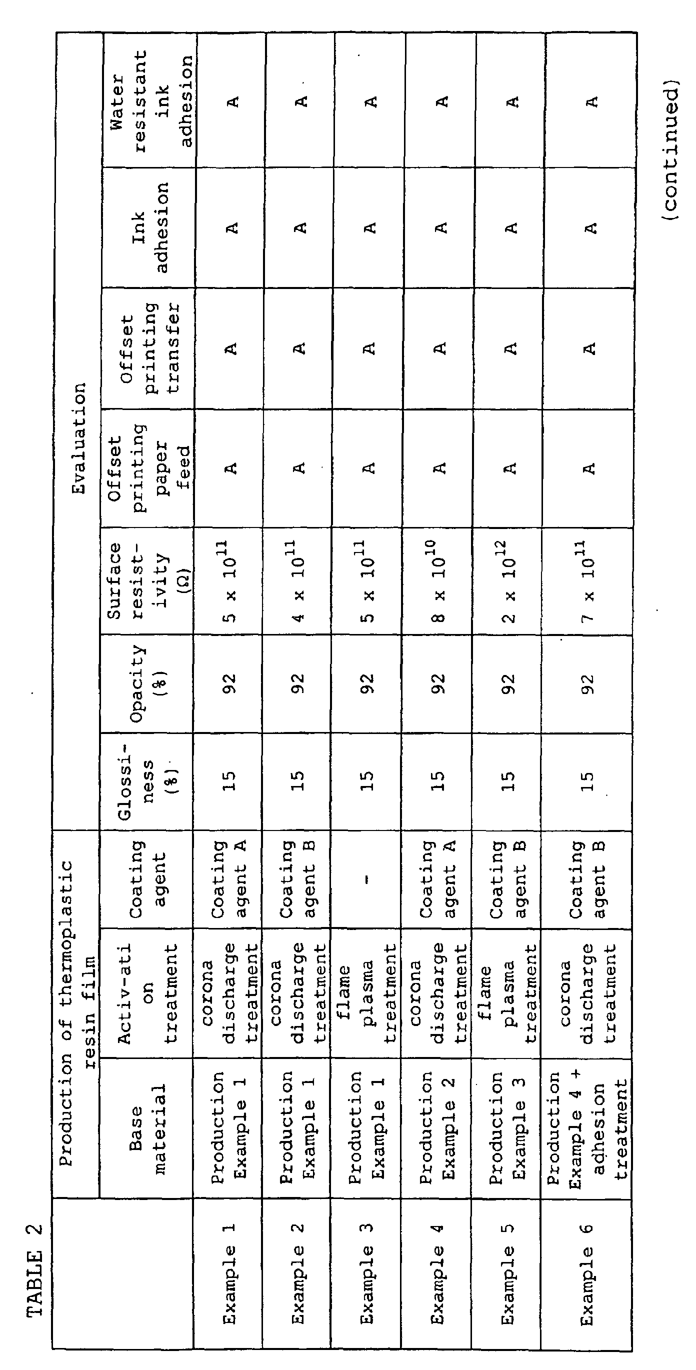

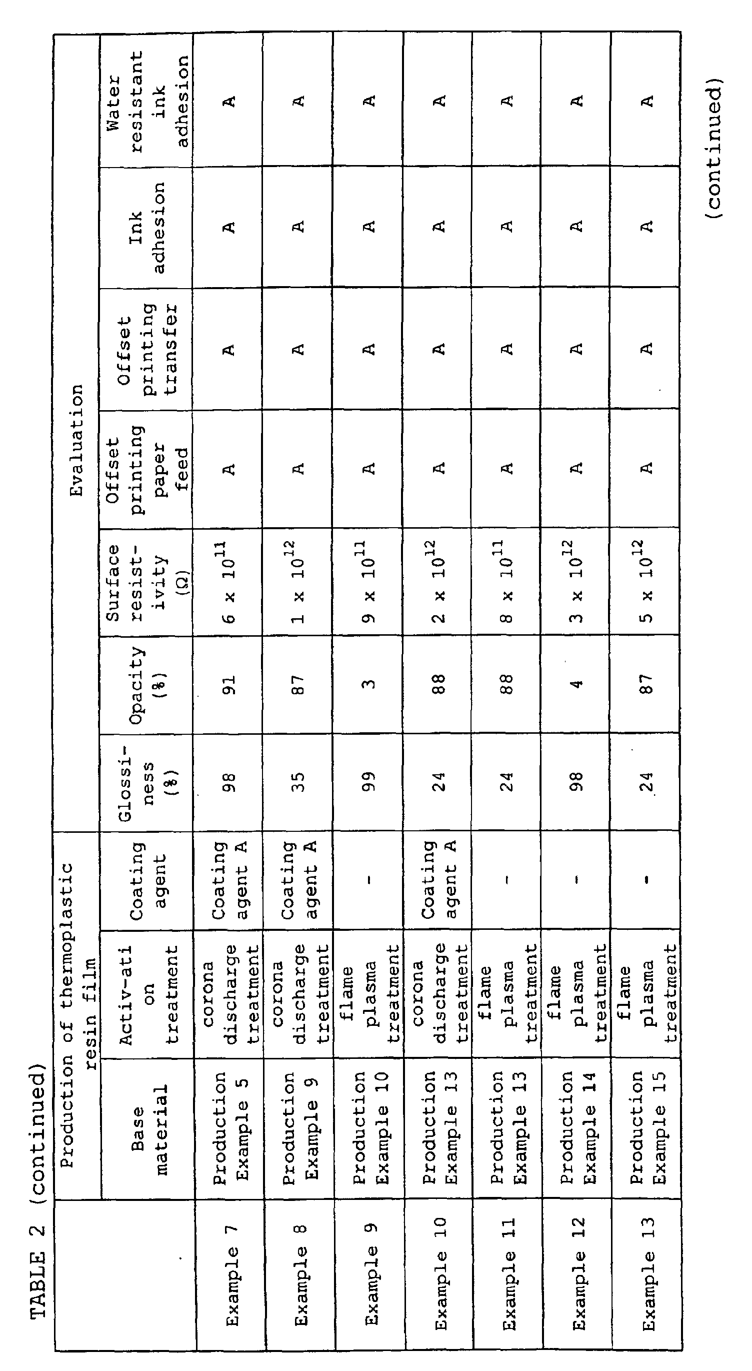

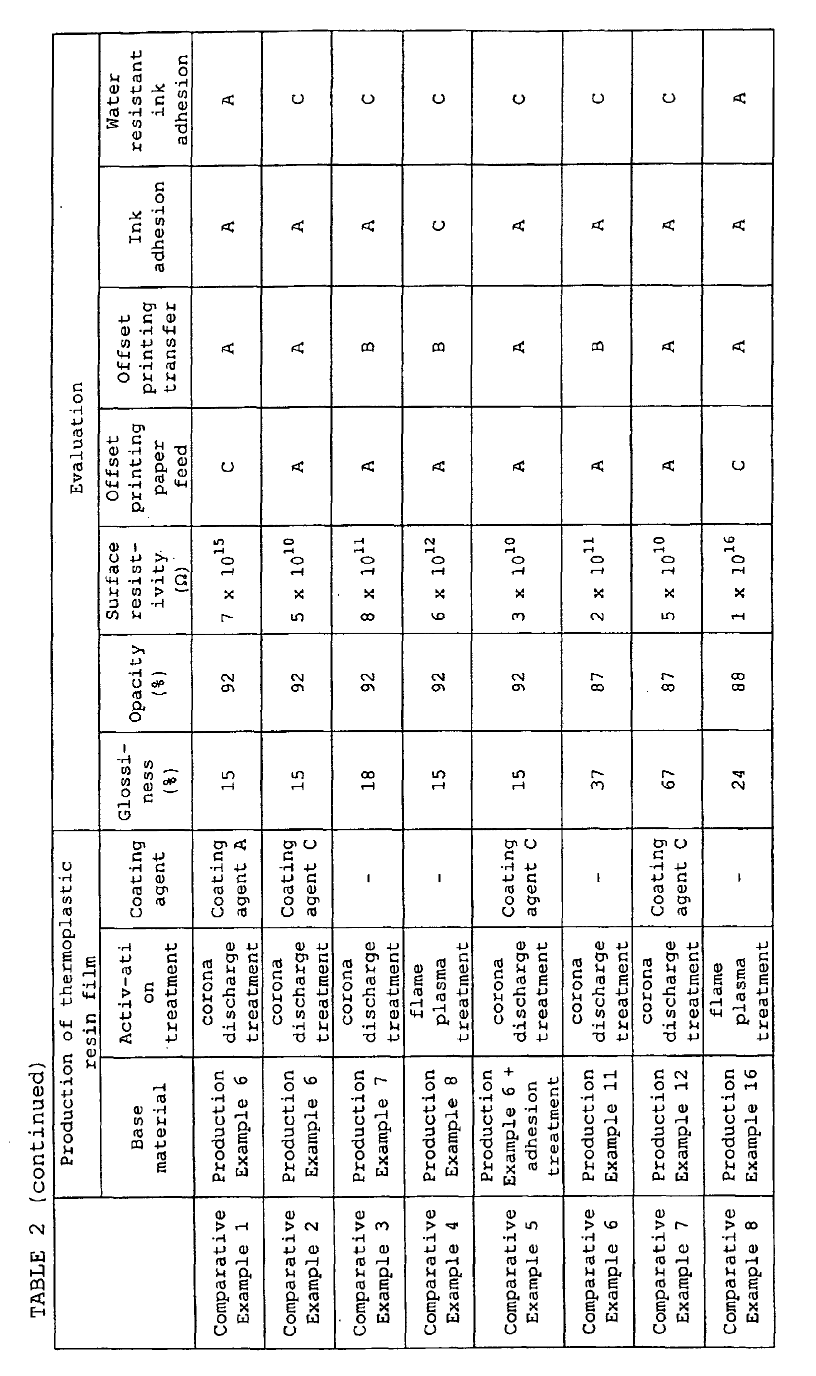

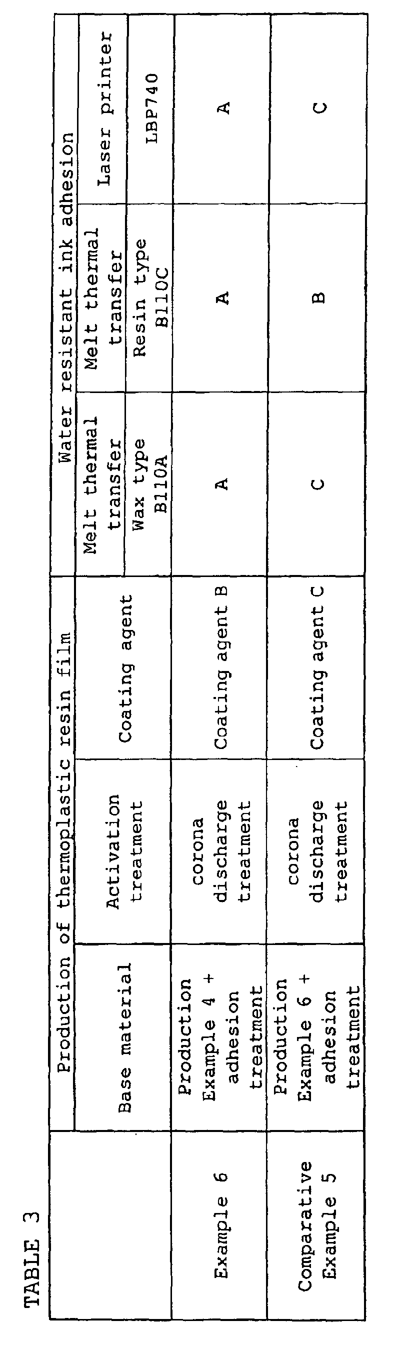

While the invention has been described in detail with reference to the specific embodiments, it is apparent to a skilled person in the art that various changes and modifications can be applied thereto without deviation from the spirit and scope of the invention.

The invention is based on the Japanese Patent Application filed on August 16, 2001 (Patent Application No. 2001-246893), which is incorporated herein by reference.

### <Industrial Applicability>

According to the invention, such a thermoplastic resin film is obtained that has excellent consistency of antistatic property, and an antistatic property under low humidity and water washing resistance are obtained. Furthermore, such a thermoplastic film also enables stable printing with less influence of humidity, with excellent water resistant adhesion of an ink.

## Claims

1. A thermoplastic resin film that is a multilayer film comprising at least two layers and comprising a thermoplastic resin, wherein the thermoplastic resin film comprises: aprinting layer positioned on one surface or both surfaces; and inside the printing layer, an intermediate layer containing a non-transfer antistatic agent.

2. The thermoplastic resin film described in claim 1, wherein the thermoplastic resin film is stretched in at least a uniaxial direction.

3. The thermoplastic resin film described in claim 1 or 2, wherein the printing layer has a printing surface having a surface resistivity of from 1 x 10⁸ to 1 x 10¹⁴ Ω.

4. The thermoplastic resin film described in any one of claims 1 to 3, wherein the printing layer has a printing surface having an ink adhesion strength of from 0.5 to 10 kg·cm.

5. The thermoplastic resin film described in any one of claims 1 to 4, wherein the printing surface of the printing layer is subjected to an activation treatment.

6. The thermoplastic resin film described in claim 5, wherein after subjecting the printing surface to the activation treatment, a coating agent layer having an ink adhesion property is provided.

7. The thermoplastic resin film described in claim 1, wherein the multilayer film contains inorganic fine powder and/or organic filler.

8. The thermoplastic resin film described in any one of claims 1 to 7, wherein the antistatic agent includes a polyamide copolymer as a main component.

9. The thermoplastic resin film described in claim 8, **characterized in that** the antistatic agent includes a polyether ester amide as a main component.

10. The thermoplastic resin film described in claim 9, wherein the intermediate layer contains a thermoplastic resin composition containing
| | | |
|---|---|---|
| Component a | thermoplastic resin | 5 to 95% by weight |
| Component b | polyether ester amide | 5 to 35% by weight |
| Component c | polyamide resin | 0 to 20% by weight |
| Component d | inorganic fine powder and/or organic filler | 0 to 70% by weight. |

11. The thermoplastic resin film described in claim 10, wherein the component a of the intermediate layer is a polyolefin resin.

12. The thermoplastic resin film described in claim 10 or 11, wherein the intermediate layer contains from 0.01 to 5% by weight of a metallic salt as component e.

13. The thermoplastic resin film described in any one of claims 10 to 12, wherein the intermediate layer contains from 0.5 to 20% by weight of an ionomer as component f.

14. The thermoplastic resin film described in any one of claims 10 to 13, wherein the intermediate layer contains 1 to 20% by weight of a modified low molecular weight polyolefin as component g.

15. The thermoplastic resin film described in claim 5, wherein after subjecting the printing surface to the activation treatment, a pigment coating layer is provided.
